# EUROPÄISCHE PATENTSCHRIFT

(11) **EP 0 695 401 B1**
(45) Veröffentlichungstag und Bekanntmachung des Hinweises auf die Patenterteilung: **01.10.1997**
(21) Anmeldenummer: 94915080.9
(22) Anmeldetag: 21.04.1994
(51) Int. Cl.: F16D 55/00

(54) **ACHSSCHENKELANORDNUNG FÜR KRAFTFAHRZEUGE**
STEERING KNUCKLE ARRANGEMENT FOR MOTOR VEHICLES
SYSTEME DE FUSEE D'ESSIEU POUR AUTOMOBILES

(30) Priorität: 30.04.1993 DE 4314311
(43) Veröffentlichungstag der Anmeldung: 07.02.1996
(73) Patentinhaber: ITT Automotive Europe GmbH, 60488 Frankfurt (DE)
(72) Erfinder: HOFMANN, Heinrich, D-97422 Schweinfurt (DE); BETZER, Rolf-Dieter, D-65760 Eschborn (DE); WEILER, Rolf, D-65817 Eppstein (DE)
(86) Internationale Anmeldenummer: EP9401242
(87) Internationale Veröffentlichungsnummer: WO9425771

(56) Entgegenhaltungen:
- DE-A- 2 148 797
- DE-A- 3 044 185
- GB-A- 1 480 068
- GB-A- 1 481 687
- GB-A- 1 481 688
- US-A- 4 096 926

## Beschreibung

Die Erfindung betrifft eine Achsschenkelanordnung für die angetriebenen Räder von Kraftfahrzeugen gemäß dem Oberbegriff des Patentanspruchs 1.

Eine gattungsgemäße Achsschenkelanordnung ist beispielsweise aus der DE 30 44 185 Al bekannt. Diese bekannte Achsschenkelanordnung besteht aus relativ vielen Einzelteilen, die unter erheblichem Montageaufwand miteinander verbunden werden müssen, wobei zusätzliche Einzelteile als Verbindungsmittel erforderlich sind. Dabei werden nicht nur die Herstellungskosten, sondern auch das Gewicht der Achsschenkelanordnung erhöht.

Die DE 21 48 797 offenbart eine Achsschenkelanordnung mit einem Dreieckslenker, der über eine Abfederung rahmenseitig befestigt ist und radseitig die Aufnahme der Radlagerung mit Radachse erlaubt sowie in einer Ausnehmung die Befestigung eines Scheibenbremssattels gestattet. Außerdem ist an der Radlagerung eine Befestigungsmöglichkeit für die Bremsscheibe vorgesehen. Der mit zusätzlichen Versteifungsrippen versehene kompakte Dreieckslenker bietet nur wenig Bauraum für die Montage und weist auch Gewichtsnachteile auf. Insbesondere die Befestigung des Bremssattels innerhalb einer engen Ausnehmung des Dreieckslenkers gestaltet sich aufgrund des geringen Platzbedarfes als besonders schwierig und erfordert zudem für die üblicherweise angewandte Verschraubung des Bremssattels noch zusätzliche Befestigungsschrauben. Auch die axiale Halterung des radial äußeren Ringes der Radlagerung, der über einen angeschraubten Ring axial fixiert wird, benötigt einen zusätzlichen Teile- und Montageaufwand.

Weiterhin ist man allgemein bestrebt, den Aufwand für die Endmontage des Fahrzeugs so gering wie möglich zu halten. Es wird daher als Nachteil angesehen, wenn nach der Befestigung eines Trägerbauteils einer Achsschenkelanordnung an der Radaufhängung des Kraftfahrzeugs noch beispielsweise eine Scheibenbremse oder ein Gleichlaufgelenk für den Radantrieb montiert werden müssen.

Aufgabe der Erfindung ist es, eine gattungsgemäße Achsschenkelanordnung im Hinblick auf ein geringes Gewicht und eine einfache Montage zu verbessern, wobei insbesondere der Aufwand für die Endmontage am Kraftfahrzeug reduziert werden soll.

Die Lösung der Aufgabe ergibt sich aus dem kennzeichnenden Teil des Patentanspruchs 1. Der größte Teil der erfindungsgemäßen Achsschenkelanordnung ist zu einem Modul zusammengefaßt, das fertig vormontiert und beispielsweise von einem Zulieferer an den Fahrzeughersteller als Einheit geliefert wird. Bei der Endmontage des Fahrzeugs sind nur noch wenige Handgriffe erforderlich, um die vormontierte Einheit an der Radaufhängung des Fahrzeugs zu befestigen. Dabei sind die Trägerarme der Schwimmsattel-Scheibenbremse einstückig in das Trägerbauteil der Achsschenkelanordnung integriert. Es entfallen somit der Aufwand für die Befestigung der Trägerarme am Trägerbauteil und Befestigungsschrauben.

Vorteilhafte Ausgestaltungsformen, die insbesondere die Teilevielfalt und das Gewicht der erfindungsgemäßen Achsschenkelanordnung reduzieren, sind in den Unteransprüchen beschrieben.

In einer bevorzugten Ausführungsform gemäß Anspruch 2 ist der Schwimmsattel an den Trägerarmen verschiebbar geführt und damit sind alle Funktionen eines Bremsträgers in das Trägerbauteil integriert.

In einer Ausführungsform gemäß Anspruch 3 ist der radial äußere Ring des Radachslagers durch Einpressen im Trägerbauteil befestigt. Zusätzliche Befestigungsmaßnahmen sind nicht erforderlich. Eine weitere vorteilhafte Maßnahme ergibt sich aus Anspruch 4, nach dem der radial innere Ring des Radachslagers einstückig mit dem rotierenden Achskörper ausgebildet ist.

Vorteilhafte Weiterbildungen hinsichtlich einer einfachen Ausgestaltung des Achskörpers ergeben sich aus den Ansprüchen 5 und 6, wonach ein Teil des Gleichlaufgelenks bzw. ein Flansch für die Befestigung der Bremsscheibe einstückig an die Radachse angeformt ist.

Vorteilhafte Ausgestaltungsformen des Trägerbauteils ergeben sich aus den Ansprüchen 7 bis 11, wonach ein oder mehrere Befestigungsabschnitte am Trägerbauteil oder im Falle eines gelenkten Fahrzeugrades ein Hebel für die Lenkung vorgesehen und vorzugsweise einstückig mit dem Trägerbauteil ausgebildet sind. Dabei wird gemäß Anspruch 11 insbesondere empfohlen, das Trägerbauteil auf einfache und kostengünstige Weise als ein Gußstück auszubilden.

Der Anspruch 12 beschreibt ein vereinfachtes Herstellungsverfahren für eine Achsschenkelanordnung, das sich ergibt, wenn das Trägerbauteil mit der Scheibenbremse und dem Radachslager zusammen mit der Radachse, die den Flansch und das schalenförmige Teil des Gleichlaufgelenkes umfaßt, und der Bremsscheibe zu einem Modul verbunden und als vormontierte Einheit für die Endmontage des Kraftfahrzeuges bereitgestellt wird.

Ein Ausführungsbeispiel der Erfindung wird nachfolgend anhand der Zeichnungen näher erläutert.

Es zeigen:
- Figur 1: eine teilweise geschnittene Draufsicht auf ein Gußstück einer erfindungsgemäßen Achsschenkelanordnung mit einer Schwimmsattel-Scheibenbremse,
- Figur 2: eine Teilansicht des Gußstücks Ausrichtung A von Figur 1,
- Figur 3: eine überwiegend im Schnitt gemäß Linie B-B von Figur 1 dargestellte fertigmontierte Achsschenkelanordnung mit den rotierenden Teilen und der Radfelge.

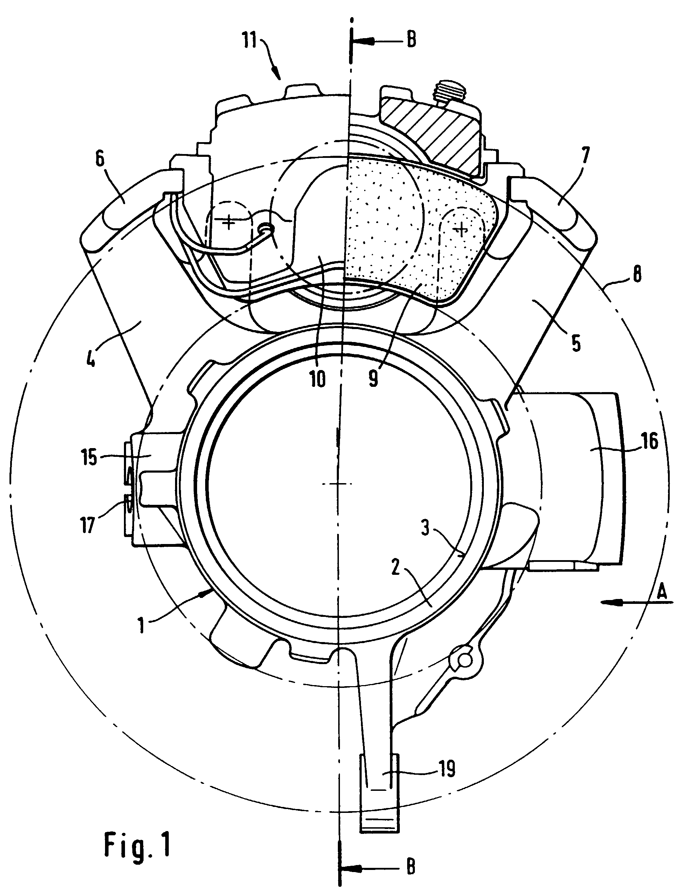

In Figur 1 erkennt man ein Trägerbauteil 1, das einen im wesentlichen ringförmigen zentralen Abschnitt 2 mit einer zentralen Bohrung 3 aufweist. Von dem zentralen Abschnitt 2 ausgehend erstrecken sich zwei Trägerarme 4, 5 zunächst in radialer Richtung nach außen bis zum äußeren Rand der durch Strichelung angedeuteten Bremsscheibe 8. In diesem Bereich sind die Trägerarme 4, 5 abgewinkelt und ragen mit Führungsabschnitten 6, 7 in axialer Richtung über den Rand der Bremsscheibe 8.

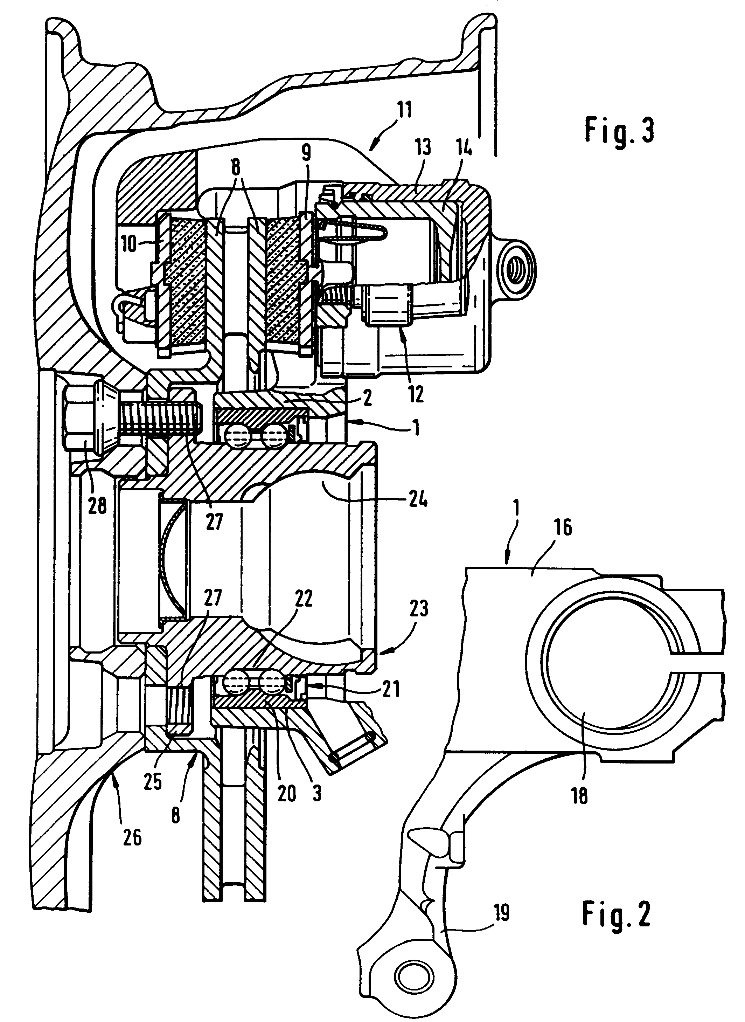

Zwei beiderseits der Bremsscheibe 8 angeordnete Bremsbeläge 9, 10 sind an den Führungsabschnitten 6, 7 axial verschiebbar geführt. Wie man am besten in Figur 3 erkennt, ist ein Schwimmsattel 11 mittels zweier Bolzenführungen 12 am Trägerbauteil 1 befestigt und ebenfalls axial verschiebbar geführt. Der Schwimmsattel 11 umgreift den äußeren Rand der Bremsscheibe 8 und die beiden Bremsbeläge 9, 10 zangenartig. Auf der axial inneren Seite ist ein Bremszylinder 13 mit einem Bremskolben 14 angeordnet, der bei Betätigung der Bremse direkt auf den inneren Bremsbelag 9 einwirkt. Wenn der Bremsbelag 9 an die Bremsscheibe 8 angedrückt wird, verschiebt sich infolge der Reaktionskraft der Schwimmsattel 11 in seinen Bolzenführungen 12, bis auch der äußere Bremsbelag 10 an die andere Seite der Bremsscheibe 8 angedrückt wird. Vom Schwimmsattel 11 wird nur die zum Andruck der Bremsbeläge 9, 10 erforderliche Zuspannkraft übertragen. Die beim Bremsen wegen der Reibung entstehenden Umfangskräfte werden von den Bremsbelägen 9, 10 direkt auf die Führungsabschnitte 6, 7 der Trägerarme 4, 5 übertragen.

Das Trägerbauteil 1 weist zwei verschieden große Befestigungsabschnitte 15, 16 auf, die vom zentralen Abschnitt 2 ausgehend, sich im wesentlichen in entgegengesetzte Richtungen erstrecken. Die Befestigungsabschnitte 15, 16 sind jeweils mit einem Auge 17, 18 zur Befestigung an der Radaufhängung versehen, wobei das größere Auge 18 des größeren Befestigungsabschnitts 16 nur in Figur 2 erkennbar ist. Weiterhin besitzt das Trägerbauteil 1 noch einen Hebel 19, der sich von dem zentralen Abschnitt 2 ausgehend im wesentlichen in eine der Scheibenbremse abgewandte radiale Richtung erstreckt und zur Verbindung mit einem Lenkgestänge des Fahrzeugs bestimmt ist.

Das Trägerbauteil 1 besteht aus einem einzigen Gußstück, wobei an den zentralen Abschnitt 2 die Trägerarme 4, 5, die Befestigungsabschnitte 15, 16 und der Hebel 19 einstückig angeformt sind.

In die zentrale Bohrung 3 des Trägerbauteils 1 ist ein äußerer Ring 20 eines Radachslagers 21 eingepreßt. Ein innerer Ring 22 des Radachslagers 21 ist einstückig an die Radachse 23 angeformt. Auf der Innenseite ist an die Radachse 23 auch das eine schalenförmige Teil 24 eines Gleichlaufgelenks einstückig angeformt, über welches die Radachse mit einer nicht gezeigten Antriebswelle verbunden und angetrieben wird. Schließlich ist an die Radachse 23 noch ein Flansch 25 für die Befestigung der Bremsscheibe 8 und einer Radfelge 26 einstückig angeformt.

Der beschriebene drehbar gelagerte einstückige Radachskörper übernimmt also die Funktionen der Radachse 23 des inneren Rings 22 eines Radachslagers 21, des einen schalenförmigen Teils 24 eines Gleichlaufgelenks und des Flansches 25 für die Befestigung einer Bremsscheibe 8 und der Radfelge 26. Die ansonsten zur Verbindung der genannten Funktionsteile erforderlichen Verbindungselemente und Fertigungsschritte werden hier vorteilhaft eingespart.

Der Flansch 25 ist mit Gewindebohrungen 27 versehen, in die die Radschrauben 28 eingeschraubt werden, wobei sowohl die Radfelge 26 als auch die Bremsscheibe 8 fest mit dem Flansch 25 verbunden werden.

Insbesondere durch die Ausbildung des Trägerbauteils 1 und der Radachse 23 als Kombinationsbauteile fällt die erfindungsgemäße Achsschenkelanordnung vorteilhaft leicht aus und läßt sich relativ kostengünstig fertigen. Ein besonderer Vorteil ergibt sich aber, wenn erfindungsgemäß das Trägerbauteil 1 mit der Scheibenbremse 11 und dem Radachslager 21 zusammen mit der Radachse 23, die den Flansch 25 und das schalenförmige Teil 24 umfaßt, und der Bremsscheibe 8 zu einem Modul verbunden und als vormontierte Einheit für die Endmontage des Kraftfahrzeugs bereitgestellt wird. In diesem Fall können alle für den Zusammenbau des Moduls erforderlichen Montagearbeiten beim Zulieferer erfolgen, während die Endmontage mit einem minimalen Aufwand durchgeführt werden kann.

## Patentansprüche

1. Achsschenkelanordnung für die angetriebenen Räder von Kraftfahrzeugen, mit einem an der Radaufhängung befestigbaren Trägerbauteil (1), das eine Schwimmsattel-Scheibenbremse und ein Radachslager (21) mit einer drehbar gelagerten Radachse (23) trägt, die mit einem Gleichlaufgelenk zum Antrieb und mit einem Flansch (25) zur Befestigung einer Bremsscheibe (8) versehen ist, dadurch **gekennzeichnet,** daß das Trägerbauteil (1) mit der Scheibenbremse und dem Radachslager (21) zusammen mit der Radachse (23), dem Flansch (25), der Bremsscheibe (8) und einem schalenförmigen Teil (24) des Gleichlaufgelenks zu einem Modul verbunden ist, das als vormontierte Einheit bei der Endmontage des Kraftfahrzeugs an der Radaufhängung befestigbar ist, wobei das Trägerbauteil (1) zwei einstückig angeformte Trägerarme (4, 5) aufweist, die mit ihren Führungsabschnitten (6, 7) den äußeren Rand der Bremsscheibe (8) übergreifen und an denen die Bremsbeläge (9, 10) der Scheibenbremse abgestützt und axial verschiebbar geführt sind.

2. Achsschenkelanordnung nach Anspruch 1, dadurch **gekennzeichnet,** daß der Schwimmsattel (11) an den Trägerarmen (4, 5) axial verschiebbar geführt ist, vorzugsweise mittels zweier Bolzenführungen (12).

3. Achsschenkelanordnung nach einem der vorhergehenden Ansprüche, dadurch **gekennzeichnet,** daß ein radial äußerer Ring (20) des Radachslagers (21) in eine zentrale Bohrung (3) des Trägerbauteils (1) eingepreßt ist.

4. Achsschenkelanordnung nach einem der vorhergehenden Ansprüche, dadurch **gekennzeichnet,** daß an die Radachse (23) ein radial innerer Ring (22) des Radachslagers (21) einstückig angeformt ist.

5. Achsschenkelanordnung nach Anspruch 4, dadurch **gekennzeichnet,** daß an die Radachse (23) das schalenförmige Teil (24) des Gleichlaufgelenks einstückig angeformt ist.

6. Achsschenkelanordnung nach Anspruch 4 oder 5, dadurch **gekennzeichnet,** daß an die Radachse (23) der Flansch (25) für die Befestigung der Bremsscheibe (8) einstückig angeformt ist, wobei der Flansch (25) vorzugsweise Gewindebohrungen (27) aufweist und die Bremsscheibe (8) vorzugsweise durch Radschrauben (28) befestigt ist.

7. Achsschenkelanordnung nach einem der vorhergehenden Ansprüche, dadurch **gekennzeichnet,** daß das Trägerbauteil (1) mindestens einen Befestigungsabschnitt (15, 16) mit einem Auge (17, 18) zur Befestigung an der Radaufhängung aufweist.

8. Achsschenkelanordnung nach Anspruch 7, dadurch **gekennzeichnet,** daß der Befestigungsabschnitt (15, 16) einstückig an das Trägerbauteil (1) angeformt ist.

9. Achsschenkelanordnung nach einem der vorhergehenden Ansprüche, dadurch **gekennzeichnet,** daß das Trägerbauteil (1) mit einem Hebel (19) für die Lenkung des Fahrzeugrades versehen ist.

10. Achsschenkelanordnung nach Anspruch 9, dadurch **gekennzeichnet,** daß der Hebel (19) einstückig an das Trägerbauteil (1) angeformt ist.

11. Achsschenkelanordnung nach Anspruch 1, dadurch **gekennzeichnet,** daß das Trägerbauteil (1) aus einem Gußstück besteht, an das Trägerarme (4, 5) für die Scheibenbremse, ein Befestigungsabschnitt (15, 16) für die Radaufhängung und ein Hebel (19) für die Lenkung einstückig angeformt sind.

12. Verfahren zur Herstellung einer Achsschenkelanordnung für die angetriebenen Räder von Kraftfahrzeugen mit einem an einer Radaufhängung befestigbaren Trägerbauteil (1), einer Schwimmsattel-Scheibenbremse (11), einem Radachslager (21), einer drehbar gelagerten Radachse (23), die ein schalenförmiges Teil (24) des Gleichlaufgelenks und einen Flansch (25) zur Befestigung einer Bremsscheibe (8) aufweist, und der Bremsscheibe (8), dadurch **gekennzeichnet,** daß das Trägerbauteil (1) mit der Scheibenbremse (11) und dem Radachslager (21) zusammen mit der Radachse (23), die den Flansch (25) und das schalenförmige Teil (24) des Gleichlaufgelenkes umfaßt, sowie der Bremsscheibe (8) zu einem Modul verbunden wird und dieses Modul als vormontierte Einheit für die Endmontage des Kraftfahrzeuges bereitgestellt wird.

## Claims

1. A steering knuckle assembly for the drive wheels of automotive vehicles, including a carrier component (1) adapted to be attached to the wheel suspension, carrying a floating-caliper disc brake and a wheel axle bearing (21) with a rotatably mounted wheel axle (23) which has a constant-velocity joint for the drive and a flange (25) for the attachment of a brake disc (8),
**characterized** in that the carrier component (1) with the disc brake and the wheel axle bearing (21) along with the wheel axle (23), the flange (25), the brake disc (8) and a shell-shaped part (24) of the constant-velocity joint are coupled to form a module which, as a preassembled unit, can be attached to the wheel suspension in the final assembly of the automotive vehicle, wherein the carrier component (1) has two integrally formed supporting arms (4, 5) which, with their guiding portions (6, 7), straddle the external edge of the brake disc (8), and on which the brake pads (9, 10) of the disc brake are supported and guided so as to be displaceable in an axial direction.

2. A steering knuckle assembly as claimed in claim 1,
**characterized** in that the floating caliper (11) is guided on the supporting arms (4, 5) so as to be displaceable in an axial direction, preferably by way of two pin guides (12).

3. A steering knuckle assembly as claimed in any one of the preceding claims,
**characterized** in that a radially external ring (20) of the wheel axle bearing (21) is pressed into a central bore (3) of the carrier component (1).

4. A steering knuckle assembly as claimed in any one of the preceding claims,
**characterized** in that a radially internal ring (22) of the wheel axle bearing (21) is formed integrally with the wheel axle (23).

5. A steering knuckle assembly as claimed in claim 4,
**characterized** in that the shell-shaped part (24) of the constant-velocity joint is formed integrally with the wheel axle (23).

6. A steering knuckle assembly as claimed in claim 4 or claim 5,
**characterized** in that the flange (25) for the attachment of the brake disc (8) is formed integrally with the wheel axle (23), the flange (25) preferably including threaded bores (27) and the brake disc (8) being preferably fixed by wheel lug bolts (28).

7. A steering knuckle assembly as claimed in any one of the preceding claims,
**characterized** in that the carrier component (1) includes at least one fastening section (15, 16) with an eyelet (17, 18) for attachment to the wheel suspension.

8. A steering knuckle assembly as claimed in claim 7,
**characterized** in that the fastening section (15, 16) is integrally formed on the carrier component (1).

9. A steering knuckle assembly as claimed in any one of the preceding claims,
**characterized** in that the carrier component (1) has a lever (19) for the steering of the vehicle wheel.

10. A steering knuckle assembly as claimed in claim 9,
**characterized** in that the lever (19) is formed integrally with the carrier component (1).

11. A steering knuckle assembly as claimed in claim 1,
**characterized** in that the carrier component (1) is made of a casting on which the supporting arms (4, 5) for the disc brake, a fastening section (15, 16) for the wheel suspension and a lever (19) for steering are integrally formed.

12. Method of manufacturing a steering knuckle assembly for the drive wheels of automotive vehicles, including a carrier component (1) adapted to be attached to the wheel suspension, a floating-caliper disc brake, a wheel axle bearing (21), a rotatably mounted wheel axle (23) which includes a shell-shaped part (24) of the constant-velocity joint for the drive and a flange (25) for the attachment of a brake disc (8),
**characterized** in that the carrier component (1) with the disc brake and the wheel axle bearing (21) along with the wheel axle (23), which comprises the flange (25) and a shell-shaped part (24) of the constant-velocity joint, and the brake disc (8) are coupled to form a module which, as a preassembled unit, is supplied for the final assembly of the automotive vehicle.

## Revendications

1. Agencement de fusée, pour roue motrice de véhicule automobile, comprenant une pièce de support (1) qui est agencée de façon à pouvoir être fixée sur la suspension de roue et qui porte un frein à disque à étrier flottant et un roulement de moyeu de roue (21) auquel est associé un moyeu de roue (23) monté rotatif et pourvu d'un joint homocinétique de transmission et d'une collerette (25) servant à la fixation d'un disque de frein (8), caractérisé en ce que la pièce de support (1) est réunie au disque de frein et au roulement de moyeu de roue (21) en commun avec le moyeu de roue (23), la collerette (25), le disque de frein (8) et une partie en forme de bol (24) du joint homocinétique, de façon à former un module qui peut être fixé sur la suspension de roue sous forme d'un ensemble unitaire, préassemblé, lors de l'assemblage final du véhicule automobile, la pièce de support (1) comportant deux bras porteurs (4, 5), réalisés d'une seule pièce, qui chevauchent le bord extérieur du disque de frein (8) par leurs sections de guidage (6, 7) et sur lesquels les garnitures de frein (9, 10) du frein à disque sont guidées en appui et d'une manière coulissante suivant la direction axiale.

2. Agencement de fusée selon la revendication 1, caractérisé en ce que l'étrier flottant (11) est guidé sur les bras porteurs (4, 5) d'une manière coulissante suivant la direction axiale, de préférence au moyen de deux guidages (12) du type à tige.

3. Agencement de fusée selon l'une des revendications précédentes, caractérisé en ce qu'un chemin radialement extérieur (20) du roulement de moyeu de roue (21) est emboîté à force dans un alésage central (3) de la pièce de support (1).

4. Agencement de fusée selon l'une des revendications précédentes, caractérisé en ce qu'un chemin radialement intérieur (22) du roulement de moyeu de roue (21) est réalisé d'une seule pièce avec le moyeu de roue (23).

5. Agencement de fusée selon la revendication 4, caractérisé en ce que la partie en forme de bol (24) du joint homocinétique est réalisée d'une seule pièce avec le moyeu de roue (23).

6. Agencement de fusée selon la revendication 4 ou 5, caractérisé en ce que la collerette (25) servant à la fixation du disque de frein (8) est réalisée d'une seule pièce avec le moyeu de roue (23), la collerette (25) comportant de préférence des trous filetés (27) et le disque de frein (8) étant de préférence fixé au moyen de boulons de roue (28).

7. Agencement de fusée selon l'une des revendications précédentes, caractérisé en ce que la pièce de support (1) comprend au moins une section de fixation (15, 16) comportant un oeil (17, 18) servant à la fixation sur la suspension de roue.

8. Agencement de fusée selon la revendication 7, caractérisé en ce que la section de fixation (15, 16) est réalisée d'une seule pièce avec la pièce de support (1).

9. Agencement de fusée selon l'une des revendications précédentes, caractérisé en ce que la pièce de support (1) est pourvue d'un levier (19) servant à orienter la roue de véhicule.

10. Agencement de fusée selon la revendication 9, caractérisé en ce que le levier (19) est réalisé d'une seule pièce avec la pièce de support (1).

11. Agencement de fusée selon la revendication 1, caractérisé en ce que la pièce de support (1) est constituée d'une pièce coulée sur laquelle sont formés d'une pièce des bras porteurs (4, 5) pour le frein à disque, une section de fixation (15, 16) pour la suspension de roue et un levier (19) pour l'orientation.

12. Procédé de fabrication d'un agencement de fusée, pour roue motrice de véhicule automobile, comprenant une pièce de support (1) agencée de façon à pouvoir être fixée sur une suspension de roue, un frein à disque à étrier flottant (11), un roulement de moyeu de roue (21), un moyeu de roue (23), qui est monté rotatif et comprend une partie en forme de bol (24) du joint homocinétique et une collerette (25) servant à la fixation d'un disque de frein (8), et le disque de frein (8), caractérisé en ce qu'on réunit sous forme d'un module la pièce de support (1) avec le frein à disque (11) et le roulement de moyeu de roue (21) en commun avec le moyeu de roue (23) qui comporte la collerette (25) et la partie en forme de bol (24) du joint homocinétique, et avec le disque de frein (8), et en ce qu'on tient ce module disponible en tant qu'ensemble unitaire, préassemblé pour l'assemblage final du véhicule automobile.
